# FASCICULE DE BREVET EUROPEEN

(11) **EP 3 412 523 B1**
(45) Date de publication et mention de la délivrance du brevet: **09.09.2020**
(21) Numéro de dépôt: 18173737.0
(22) Date de dépôt: 23.05.2018
(51) Int. Cl.: B60S 1/04

(54) **SOUS-ENSEMBLE DE TIMONERIE ET TIMONERIE MAINTENUS DANS UNE POSITION DE TRANSPORT À L AIDE D'UN ÉLÉMENT DE BLOCAGE, ET PROCÉDÉ DE BLOCAGE DE CETTE TIMONERIE À L AIDE D'UN TEL ÉLÉMENT DE BLOCAGE**
UNTEREINHEIT EINES STEUERSTANDS UND STEUERSTAND, DIE MITHILFE EINES BLOCKIERELEMENTS IN EINER TRANSPORTSTELLUNG GEHALTEN WERDEN, SOWIE BLOCKIERVERFAHREN DIESES STEUERSTANDS MITHILFE EINES BLOCKIERELEMENTS
LINKAGE SUBASSEMBLY AND LINKAGE HELD IN A TRANSPORT POSITION BY MEANS OF A LOCKING ELEMENT, AND METHOD FOR LOCKING SAID LINKAGE BY MEANS OF SUCH A LOCKING ELEMENT

(30) Priorité: 05.06.2017 FR 1754970
(43) Date de publication de la demande: 12.12.2018
(73) Titulaire: Valeo Systèmes d'Essuyage, 78322 Le Mesnil Saint Denis (FR)
(72) Inventeur: KUCHLY, Nicolas, 63500 ISSOIRE (FR); RENOUX, Pascal, 63500 ISSOIRE (FR); BAUD, Frédéric, 63500 ISSOIRE (FR); VIARD, Robin, 63500 ISSOIRE (FR)
(74) Mandataire: Valeo Vision

(56) Documents cités:
- DE-A1- 10 313 540
- DE-A1-102015 219 853
- FR-A1- 2 972 163

## Description

La présente invention se rapporte au domaine des timoneries des mécanismes d'essuyage, notamment pour véhicule automobile, et plus particulièrement au blocage de ces timoneries dans une position de transport. Plus spécifiquement, la présente invention se rapporte à un sous-ensemble d'une timonerie et à une timonerie comprenant au moins une manivelle et au moins une bielle bloquées dans une position de transport à l'aide d'un élément de blocage. La présente invention se rapporte également à un procédé de blocage de ce sous-ensemble à l'aide de l'élément de blocage afin de maintenir la timonerie dans sa position de transport.

Les timoneries de mécanisme d'essuyage de véhicules automobiles sont des systèmes articulés en différents endroits. Cette articulation est nécessaire pour le bon fonctionnement du système d'essuyage une fois la timonerie installée sur le véhicule automobile. Cependant, une telle articulation présente des problèmes notamment pour le transport de cette timonerie et pour l'installation de celle-ci sur le véhicule automobile. Ainsi, il est nécessaire de limiter les degrés de liberté de la timonerie aussi bien lors de son transport que lors de son installation.

On connaît des éléments de blocage permettant de relier la bielle à des paliers permettant la fixation de la timonerie sur le véhicule automobile de sorte que la timonerie soit dans une position de transport. Les éléments de blocage connus dans l'état de la technique peuvent se présenter sous différentes formes, comme par exemple sous une forme de pince, afin d'assurer le blocage de cette timonerie dans une position de transport et d'installation, c'est-à-dire une position dans laquelle tout mouvement d'un palier de la timonerie par rapport à la bielle est empêché. Cependant, les éléments de blocage décrits dans ce document sont à usage unique et sont enlevés par découpe par exemple après installation de la timonerie sur le véhicule automobile. Ainsi, il est nécessaire d'utiliser des outils, généralement coupants, afin de pouvoir libérer la timonerie. Par ailleurs, de tels éléments de blocage génèrent des débris qu'il sera nécessaire de traiter ultérieurement, ce qui engendre des coûts supplémentaires.

Le document DE 103 13 540 A1 montre un sous ensemble de timonerie d'un mécanisme d'essuyage selon le préambule de la première revendication.

La présente invention a pour objectif de pallier au moins partiellement les inconvénients de l'art antérieur exposés ci-dessus.

Un autre objectif de la présente invention, différent des objectifs précédents, est de proposer un élément de blocage qui peut rester sur la timonerie du mécanisme d'essuyage, une fois celle-ci installée, de manière à réduire la production de déchets à traiter.

Un autre objectif de la présente invention, différent des objectifs précédents est de proposer un élément de blocage qui est simple d'installation sur une timonerie d'un mécanisme d'essuyage.

Encore un objectif de la présente invention, différent des objectifs précédents, est de proposer un élément de blocage qui permet une libération simple de la timonerie du mécanisme d'essuyage.

A cet effet, afin d'atteindre au moins un des objectifs précités au moins partiellement, la présente invention a pour objet un sous-ensemble d'une timonerie d'un mécanisme d'essuyage comprenant :
- un palier,
- une manivelle articulée sur le palier présentant une première extrémité reliée au palier et une deuxième extrémité comportant une liaison rotule permettant l'articulation d'une bielle, et
- une bielle dont une extrémité est reliée par la liaison rotule à la manivelle,
au moins la manivelle présentant une première ouverture traversante et le sous-ensemble comprenant un élément de blocage destiné à être positionné dans la première ouverture traversante et configuré pour bloquer le mouvement relatif entre la bielle et la manivelle.

L'élément de blocage assure le blocage du sous-ensemble de timonerie en position de transport en bloquant la position relative de la bielle par rapport à la première extrémité de la manivelle. Avantageusement, l'installation de l'élément de blocage est simple et aisée. Par ailleurs, la libération du sous-ensemble de timonerie est également simple et aisée.

Le sous-ensemble de timonerie peut en outre comporter une ou plusieurs des caractéristiques suivantes prises seules ou en combinaison.

La première ouverture traversante présente une forme circulaire et l'élément de blocage présente une forme cylindrique.

Selon un aspect, l'élément de blocage correspond à une vis de blocage, l'élément de blocage présentant une première extrémité comportant une tête de vis, une deuxième extrémité libre, et un axe cylindrique fileté reliant la première et la deuxième extrémités.

Selon une première variante, la deuxième extrémité de l'élément de blocage vient au contact d'une face de la bielle disposée en regard de la manivelle lorsque le sous-ensemble est dans sa position de transport.

Selon cette première variante, la bielle correspond à un profilé en U et la deuxième extrémité de l'élément de blocage vient se loger à l'intérieur du profilé en U lorsque le sous-ensemble est dans sa position de transport.

Selon un aspect, la première ouverture traversante est taraudée de manière à coopérer avec l'axe cylindrique fileté de l'élément de blocage.

Selon un autre aspect, la bielle présente à l'intérieur du profilé en U une forme complémentaire à la deuxième extrémité de l'élément de blocage, ladite forme complémentaire étant destinée à coopérer avec la deuxième extrémité libre de l'élément de blocage, ladite forme complémentaire étant de préférence taraudée, afin d'assurer le maintien en place du sous-ensemble de timonerie dans sa position de transport.

Au moins la première ouverture traversante de forme circulaire présente un diamètre identique au diamètre des ouvertures destinées à assurer la fixation du palier sur le véhicule automobile.

Selon une deuxième variante, la deuxième extrémité de l'élément de blocage peut passer à travers une deuxième ouverture traversante, notamment circulaire, disposée dans la bielle lorsque le sous-ensemble est dans sa position de transport.

Selon un aspect, la première ouverture traversante de la manivelle est taraudée.

Selon un autre aspect, la deuxième ouverture traversante disposée dans la bielle est taraudée.

Selon un encore un autre aspect, le sous-ensemble de timonerie comporte en outre un écrou de blocage de la deuxième extrémité de l'élément de blocage, ledit écrou de blocage étant destiné à être fixé au niveau de la deuxième extrémité de l'élément de blocage traversant la bielle de manière à assurer le maintient en place du sous-ensemble dans sa position de transport.

Selon ce troisième mode de réalisation, l'écrou de blocage correspond à un boulon ou à un écrou à ailettes.

La présente invention a également pour objet une timonerie d'un mécanisme d'essuyage comprenant une premier sous-ensemble et un deuxième sous-ensemble reliés entre eux par une bielle, au moins un des premier et deuxième sous-ensembles est un sous-ensemble tel que défini précédemment et au moins un des premier et deuxième sous-ensembles est agencé pour se bloquer dans la position de transport de la timonerie à l'aide de l'élément de blocage.

Le blocage de l'au moins un des premier et deuxième sous-ensembles dans la position de transport de la timonerie est réversible.

Selon un aspect, le premier et le deuxième sous-ensembles présentent au moins un élément de blocage, maintenant la position relative de la bielle fixe par rapport à la première extrémité de la manivelle portée par le sous-ensemble.

Selon cet aspect, les éléments de blocage correspondent à des vis de blocage.

La timonerie comprend en outre un moteur relié à au moins une manivelle, ledit moteur étant configuré pour permettre le déplacement en translation de la bielle.

Le moteur de la timonerie est installé du deuxième côté de la timonerie.

La présente invention a également pour objet un procédé de blocage d'une bielle et d'une manivelle d'un sous-ensemble de timonerie dans une position de transport tel que défini ci-dessus, le procédé comprenant au moins une des étapes suivantes :
- insertion de l'élément de blocage dans la manivelle de sorte que la première extrémité est en regard d'une face de la manivelle opposée à celle disposée en regard de la bielle,
- rotation de la bielle autour de la liaison rotule de manière à amener la timonerie en position de transport, et
- positionnement de l'élément de blocage, notamment par vissage, de manière à ce que la deuxième extrémité libre soit au moins en contact avec la bielle.

De manière préférée, l'élément de blocage est une vis de blocage.

Selon un mode de réalisation, l'étape de positionnement de l'élément de blocage se fait par vissage dans la manivelle dont la première ouverture traversante est taraudée.

Selon un mode de réalisation particulier, la libération de la timonerie se fait par dévissage de l'élément de blocage.

Avantageusement, les éléments de blocage sont configurés pour coopérer avec des ouvertures présentes sur le palier et sur un élément du véhicule automobile afin d'assurer la fixation de la timonerie sur le véhicule automobile.

Les éléments de blocage peuvent être installés du premier côté ou du deuxième côté de la timonerie.

D'autres avantages et caractéristiques de la présente invention apparaîtront plus clairement à la lecture de la description suivante, donnée à titre illustratif et non limitatif, et des dessins annexés dans lesquels :
- la figure 1 est une représentation schématique en perspective d'une timonerie d'un mécanisme d'essuyage bloquée dans une position de transport à l'aide d'éléments de blocage selon la présente invention,
- la figure 2 est une représentation schématique en perspective d'un sous-ensemble de timonerie présentant plus en détail une manivelle,
- la figure 3 est une représentation schématique en perspective d'un sous-ensemble de timonerie bloqué dans la position de transport selon un premier mode de réalisation,
- la figure 4 est une représentation schématique en perspective d'un sous-ensemble de timonerie bloqué dans la position de transport selon un deuxième mode de réalisation, et
- la figure 5 est une représentation schématique partielle en perspective d'une timonerie installée sur un véhicule automobile.

Sur ces figures, les éléments identiques portent les mêmes références numériques.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées ou interchangées pour fournir d'autres réalisations.

Dans la description suivante, il est fait référence à un premier et à un deuxième côtés de la timonerie, à un premier et à un deuxième sous-ensembles de timonerie, à une première et à une deuxième extrémités de la manivelle, à une première et à une deuxième surfaces de la manivelle, et à une première et à une deuxième ouvertures traversantes. Il s'agit d'un simple indexage pour différencier et dénommer des éléments proches mais non identiques. Cette indexation n'implique pas une priorité d'un élément par rapport à un autre et on peut aisément interchanger de telles dénominations sans sortir du cadre de la présente description. Cette indexation n'implique pas non plus un ordre dans le temps par exemple pour apprécier la disposition de la timonerie sur le véhicule automobile, son fonctionnement, ou encore son installation, ou encore pour apprécier l'installation de l'élément de blocage sur la timonerie afin de maintenir celle-ci dans sa position de transport.

Dans la description suivante, on entend en particulier par « position de transport », une position dans laquelle au moins une extrémité de la bielle et une manivelle à laquelle est reliée cette extrémité de la bielle forment un angle minimal. Plus précisément, au moins cette extrémité de la bielle se trouve dans une position rapprochée du palier sur lequel la manivelle est articulée de sorte que la timonerie présente un encombrement minimal lorsqu'elle se trouve dans sa position de transport. La définition de cette « position de transport » s'applique aussi bien à la timonerie qu'au sous-ensemble de timonerie.

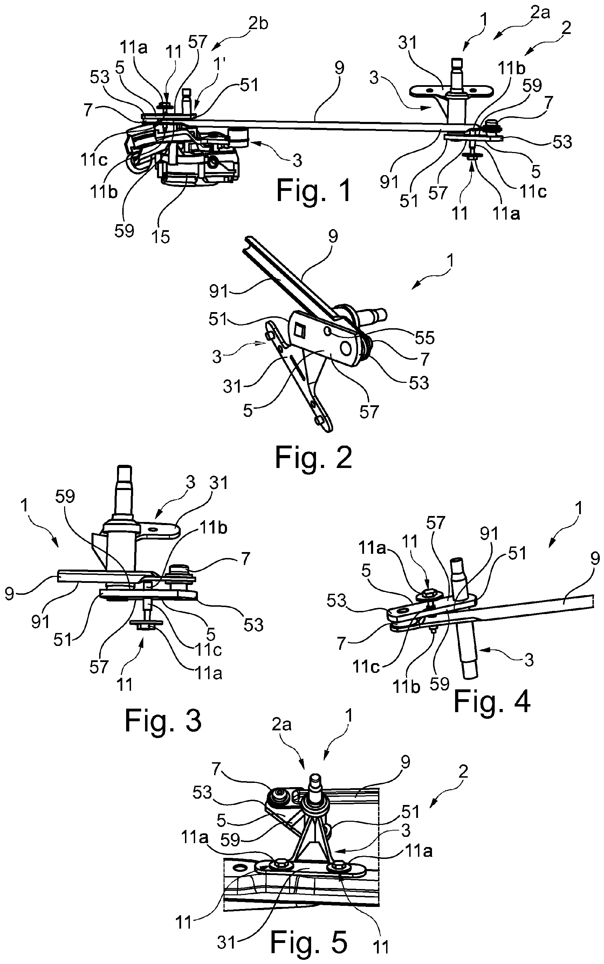

En référence aux figures 1 et 2, il est représenté une timonerie 2 d'un mécanisme d'essuyage bloquée de manière réversible dans une position de transport à l'aide d'au moins un élément de blocage 11. La timonerie 2 comprend un premier sous-ensemble 1 disposé au niveau d'un premier côté 2a de la timonerie 2, un deuxième sous-ensemble 1' disposé au niveau d'un deuxième côté 2b de la timonerie 2, et un moteur 15. Le premier 1 et le deuxième 1' sous-ensembles sont reliés entre eux par une bielle 9. Par ailleurs, le moteur 15 de la timonerie 2 est installé du deuxième côté 2b de la timonerie 2. Le deuxième côté 2b de la timonerie 2 correspond généralement au côté conducteur du véhicule automobile à l'état monté de cette timonerie 2 sur le véhicule automobile. Selon une variante, le deuxième côté 2b peut correspondre au côté passager du véhicule automobile une fois la timonerie 2 installée sur celui-ci.

Le premier 1 et le deuxième 1' sous-ensembles comprennent un palier 3 et une manivelle 5 articulée sur le palier 3. Le moteur 15 est relié à au moins une manivelle 5, notamment à la manivelle 5 portée par le deuxième sous-ensemble 1', et est configuré pour permettre le déplacement en translation de la bielle 9.

La manivelle 5 présente une première extrémité 51 reliée au palier 3, par une liaison pivot par exemple, et une deuxième extrémité 53 comportant une liaison rotule 7 reliée à une extrémité de la bielle 9 afin de permettre l'articulation de cette bielle 9 sur la manivelle 5. Par ailleurs, la manivelle 5 présente une première ouverture traversante 55 (visible sur la figure 2). L'élément de blocage 11 est destiné à être positionné dans cette première ouverture traversante 55.

L'élément de blocage 11 est configuré pour bloquer de manière réversible le mouvement relatif entre la bielle 9 et la manivelle 5, et plus précisément la première extrémité 51 de la manivelle 5, afin de maintenir au moins le premier sous-ensemble 1 dans la position de transport. L'élément de blocage 11 présente une forme cylindrique et peut correspondre à une vis de blocage. L'élément de blocage 11 présente par exemple une première extrémité 11a comportant une tête de vis, une deuxième extrémité 11b libre, et un axe cylindrique 11c fileté reliant la première 11a et la deuxième 11b extrémités. La deuxième extrémité 11b est destinée à coopérer avec la bielle 9 afin d'assurer son blocage lorsque la timonerie 2 se trouve en position de transport. Selon le mode de réalisation particulier représenté ici, la première extrémité 11a comporte une tête de vis présentant une forme permettant la mise en place de l'élément de blocage 11 par vissage par exemple et son retrait. La mise en place et le retrait de l'élément de blocage 11 peuvent être réalisés avec ou sans outil. Dans le cas où l'utilisation d'un outil est requise, la première extrémité 11a présente une forme destinée à coopérer avec cet outil qui peut par exemple être une clé ou encore un tournevis.

De plus, selon le mode de réalisation particulier décrit ici, l'axe cylindrique 11c peut présenter des dimensions comme une longueur et un diamètre destinés à coopérer avec des ouvertures présentes sur le véhicule automobile afin d'assurer la fixation de la timonerie 2 sur celui-ci. Avantageusement, cela permet de limiter la production de déchets liés à l'installation de la timonerie 2 sur le véhicule automobile car l'élément de blocage 11 peut ainsi être recyclé.

En référence à la figure 2, il est représenté le premier sous-ensemble 1 libre, c'est-à-dire qu'il ne comporte pas l'élément de blocage 11. La première ouverture traversante 55 présente une forme circulaire afin de permettre le passage de l'élément de blocage 11, et plus particulièrement de l'axe cylindrique 11a. D'autre part, afin de limiter les pièces nécessaires pour la mise en place de l'élément de blocage 11, le pourtour de la première ouverture traversante 55 peut être taraudé afin de coopérer avec le filetage de l'axe cylindrique 11c de l'élément de blocage 11. Ainsi, l'élément de blocage 11 est mis en place dans la manivelle 5 par vissage et l'utilisation d'un boulon par exemple destiné à coopérer avec la deuxième extrémité 11b de l'élément de blocage 11 n'est pas nécessaire. Selon le mode de réalisation particulier représenté ici, au moins la première ouverture traversante 55 de forme circulaire présente un diamètre identique au diamètre des ouvertures destinées à assurer la fixation du palier 3, et notamment d'une platine 31 du palier 3, sur le véhicule automobile.

Par ailleurs, selon ce mode de réalisation particulier, la bielle 9 se présente sous la forme d'un profilé en U présentant une face ouverte 91 disposée en regard de la manivelle 5 du premier sous-ensemble 1. La deuxième extrémité 11b de l'élément de blocage 11 est destinée à venir s'insérer dans cette face ouverte 91 de manière à maintenir la timonerie 2 dans sa position de transport.

Selon le mode de réalisation particulier de la figure 1, le premier 1 et le deuxième 1' sous-ensembles présentent chacun un élément de blocage 11. Ainsi, chaque extrémité de la bielle 9 est maintenue fixe par rapport à la première extrémité 51 de chaque manivelle 5 des premier 1 et deuxième 1' sous-ensembles. De ce fait, le transport de cette timonerie 2 est facilité car des degrés de liberté de mouvement de certaines pièces de cette timonerie 2 sont enlevés. D'autre part, le transport de cette timonerie 2 est également facilité car celle-ci est bloquée dans une position présentant un encombrement minimal. Par ailleurs, les différentes articulations de la bielle 9 par rapport à la manivelle 5 sont bloquées, ce qui permet également de faciliter l'installation de cette timonerie 2 sur le véhicule automobile.

Selon d'autres modes de réalisation non représentés ici, seulement le premier 1 ou le deuxième 1' sous-ensembles peut présenter l'élément de blocage 11. Ainsi, seulement une extrémité de la bielle 9, correspondant à l'extrémité reliée au sous-ensemble 1, 1' présentant l'élément de blocage 11, est maintenue dans la position de transport de la timonerie.

Par ailleurs, selon le mode de réalisation particulier de la figure 1, la bielle 9 correspond à un profilé en U. La manivelle 5 du premier sous-ensemble 1 est disposée en regard de la face ouverte 91 et la manivelle 5 du deuxième sous-ensemble 1' est disposée en regard de la face opposée à la face ouverte 91. Ainsi, la manivelle 5 du premier sous-ensemble 1 est disposée en-dessous de la bielle 9 et la manivelle 5 du deuxième sous-ensemble 1' est disposée au-dessus de la bielle 9.

Selon d'autres modes de réalisation non représentés ici, les manivelles 5 du premier 1 et deuxième 1' sous-ensembles peuvent être disposées toutes les deux au-dessus ou en-dessous de la bielle 9.

En référence à la figure 3, il est représenté le premier sous-ensemble 1 dans la position de transport selon un premier mode de réalisation particulier. Selon ce premier mode de réalisation, la bielle 9 correspond à un profilé en U et la face ouverte 91 de la bielle est disposée en regard de la manivelle 5. L'élément de blocage 11 passe à travers la première ouverture traversante 55 et la deuxième extrémité 11b de l'élément de blocage 11 vient au contact de la face ouverte 91 de la bielle 9. La première ouverture traversante 55 est taraudée de manière à coopérer avec l'axe cylindrique 11c fileté de l'élément de blocage 11 afin d'assurer son maintien en place au cours du transport. Afin de limiter les possibilités de mouvement de la bielle 9 lorsque le premier sous-ensemble 1 est bloqué dans sa position de transport, l'intérieur du profilé en U présente une forme complémentaire à la deuxième extrémité 11b de l'élément de blocage 11. Cette forme complémentaire est destinée à coopérer avec la deuxième extrémité 11b libre de l'élément de blocage 11 afin d'assurer le maintien en place de l'élément de blocage 11 lorsque le premier sous-ensemble 1 est dans la position de transport de la timonerie 2.

Selon un mode de réalisation particulier non représenté ici, la forme complémentaire portée par le profilé en U de la bielle 9 est de préférence taraudée de manière à coopérer avec la deuxième extrémité 11b de l'élément de blocage 11, afin d'assurer le maintien en place du premier sous-ensemble 1 dans sa position de transport. Selon ce mode de réalisation particulier, le taraudage de la première ouverture traversante 55 peut ne pas être nécessaire.

Selon ce premier mode de réalisation particulier, le maintien en place de l'élément de blocage 11 ne nécessite aucune pièce supplémentaire car l'axe cylindrique 11c fileté coopère avec un taraudage disposé au niveau de la première ouverture traversante 55 et/ou au niveau de la forme complémentaire disposée dans le profilé en U de la bielle 9.

En référence à la figure 4, il est représenté le deuxième sous-ensemble 1' selon un deuxième mode de réalisation particulier. Selon ce deuxième mode de réalisation, la bielle 9 correspond également à un profilé en U et la face de la bielle 9 opposée à la face ouverte 91 est disposée en regard de la manivelle 5. L'élément de blocage 11 passe à travers la première ouverture traversante 55 et la deuxième extrémité 11b de l'élément de blocage 11 passe à travers une deuxième ouverture traversante disposée dans la bielle 9 lorsque le deuxième sous-ensemble 1' est dans la position de transport. De manière préférée, cette deuxième ouverture traversante est circulaire, de manière à pouvoir coopérer avec l'axe cylindrique 11c de l'élément de blocage 11.

Selon une première variante de ce deuxième mode de réalisation particulier, la première ouverture traversante 55 de la manivelle 5 est taraudée. Selon cette première variante, l'élément de blocage 11 est retenu dans la manivelle 5 grâce à ce taraudage qui coopère avec l'axe cylindrique 11c fileté afin de maintenir le deuxième sous-ensemble 1' dans la position de transport.

Selon une deuxième variante de ce deuxième mode de réalisation particulier, la deuxième ouverture traversante disposée dans la bielle 9 est taraudée. Ainsi, l'élément de blocage 11 est maintenu en place dans cette deuxième ouverture traversante de la bielle 9 grâce à ce taraudage qui coopère avec l'axe cylindrique 11c fileté de l'élément de blocage 11 afin de maintenir en place le deuxième sous-ensemble 1' dans la position de transport.

Selon une troisième variante de ce deuxième mode de réalisation non représentée ici, le deuxième sous-ensemble 1' comporte en outre un écrou de blocage de la deuxième extrémité 11b de l'élément de blocage 11. Cet écrou de blocage est destiné à être fixé au niveau de la deuxième extrémité 11b de l'élément de blocage 11 traversant la bielle 9 de manière à assurer le maintient en place du deuxième sous-ensemble 1' dans la position de transport. L'écrou de blocage peut correspondre à un boulon ou à un écrou à ailettes par exemple.

Selon encore une autre variante de ce deuxième mode de réalisation non représentée ici, la première ouverture traversante 55 de la manivelle 5 et la deuxième ouverture traversante de la bielle 9 peuvent être taraudées et configurées pour coopérer avec l'axe cylindrique 11c de l'élément de blocage 11.

Le blocage de la bielle 9 et de la manivelle 5 du premier sous-ensemble de timonerie 1 dans la position de transport met en œuvre un procédé qui comprend différentes étapes.

Le procédé comprend une étape a d'insertion de l'élément de blocage 11 dans la première ouverture traversante 55 de la manivelle 5 de sorte que la première extrémité 11a est en regard d'une première face 57 de la manivelle 5 opposée à une deuxième face 59 de la manivelle 5 disposée en regard de la bielle 9. Le procédé comprend également une étape b de rotation de la bielle 9 autour de la liaison rotule 7 de manière à amener la timonerie 2 en position de transport. Le procédé comprend ensuite une étape c de positionnement de l'élément de blocage 11, notamment par vissage, de manière à ce que la deuxième extrémité 11b libre soit au moins en contact avec la bielle 9, c'est-à-dire que la deuxième extrémité 11b de l'élément de blocage 11 soit en contact avec la surface intérieure du profilé en U de la bielle 9 selon le premier mode de réalisation (figure 3) ou que cette deuxième extrémité 11b traverse la bielle 9 selon le deuxième mode de réalisation (figure 4). Selon différents modes de réalisations, ces différentes étapes a, b, c peuvent être interverties.

Par ailleurs, selon la troisième variante du deuxième mode de réalisation particulier, le procédé peut comprendre une étape supplémentaire d dans laquelle l'écrou de blocage coopère avec la deuxième extrémité 11b de l'élément de blocage 11.

L'étape c de positionnement de l'élément de blocage 11 est réalisée par la mise en rotation de la première extrémité 11a de manière à ce que l'axe cylindrique 11c fileté coopère avec un taraudage présent au niveau de la première ouverture traversante 55, de la deuxième ouverture traversante, ou encore au niveau de l'écrou de blocage assurant ainsi le maintien en place de l'élément de blocage 11 au cours du transport ou de l'installation de la timonerie 2 sur le véhicule automobile. Cette mise en rotation de la première extrémité 11a peut être réalisée manuellement ou à l'aide d'un outil. Dans le cas où cette mise en rotation est destinée à être réalisée à l'aide d'un outil, la première extrémité 11a de l'élément de blocage 11 présente une forme destinée à coopérer avec l'outil utilisé pour la mise en place de cet élément de blocage 11.

Lorsque l'étape de positionnement se fait par vissage de l'élément de blocage 11 dans la première ouverture traversante 55 taraudée, cela permet de limiter le nombre de pièces à utiliser pour le blocage de la timonerie 2 dans la position de transport. Par ailleurs, un tel vissage est compatible aussi bien avec le premier qu'avec le deuxième mode de réalisation particulier décrits en référence aux figures 3 et 4.

Ainsi, la mise en place de l'élément de blocage 11 afin de maintenir la timonerie 2 dans sa position de transport est possible de manière simple, aisée, et sans forcément nécessiter d'outils.

La libération de la timonerie 2 se fait par dévissage de l'élément de blocage 11. Le dévissage permet le déplacement de la deuxième extrémité 11b de manière à libérer la bielle 9. Ainsi, la libération de la timonerie 2 est possible de manière simple et aisée. Selon un mode de réalisation particulier, le dévissage est effectué jusqu'à ce que l'élément de blocage 11 soit retiré totalement du premier 1 et/ou du deuxième 1' sous-ensembles. Avantageusement, les éléments de blocage 11 sont configurées pour coopérer avec des ouvertures présentes sur la platine 31 du palier 3 et sur un élément du véhicule automobile afin d'assurer la fixation de cette platine 31 sur le véhicule automobile. Ainsi, l'élément de blocage 11 une fois retiré peut être utilisé afin de permettre la fixation de la timonerie 2 sur le véhicule automobile de manière à limiter les déchets à traiter liés à la fixation de cette timonerie 2 sur le véhicule automobile.

Les différents modes de réalisation décrits ci-dessus sont des exemples donnés à titre illustratif et non limitatif. En effet, il est tout à fait possible pour l'homme de l'art de modifier la disposition des éléments de blocage 11 sur la timonerie 2 sans sortir du cadre de la présente description, les premières extrémités 11a peuvent par exemple être disposées en regard de la bielle 9. Par ailleurs, l'homme de l'art pourra remplacer l'écrou de blocage décrit ci-dessus en référence à la troisième variante du deuxième mode de réalisation particulier par tout autre moyen de blocage de la deuxième extrémité 11b de l'élément de blocage 11.

Ainsi, le maintien en place de manière réversible dans une position de transport d'une timonerie 2 est possible grâce à l'élément de blocage 11 décrit précédemment. Avantageusement, l'installation et le retrait de l'élément de blocage 11 est possible de manière simple et aisée et sans forcément nécessiter d'outils. Par ailleurs, la possibilité d'utiliser l'élément de blocage 11 pour assurer la fixation de la timonerie 2 sur le véhicule automobile permet de limiter les déchets à traiter liés à l'installation et au transport de la timonerie 2.

## Revendications

1. Sous-ensemble (1) d'une timonerie (2) d'un mécanisme d'essuyage comprenant :
• un palier (3),
• une manivelle (5) articulée sur le palier (3) présentant une première extrémité (51) reliée au palier (3) et une deuxième extrémité (53) comportant une liaison rotule (7), et
• une bielle (9) dont une extrémité est reliée par la liaison rotule (7) à la manivelle (5),
**caractérisé en ce qu'**au moins la manivelle (5) présente une première ouverture traversante (55) et **en ce que** le sous-ensemble (1) comprend un élément de blocage (11) destiné à être positionné dans la première ouverture traversante (55) et configuré pour bloquer le mouvement relatif entre la bielle (9) et la manivelle (5).

2. Sous-ensemble (1) selon la revendication précédente, **caractérisé en ce que** la première ouverture traversante (55) présente une forme circulaire et **en ce que** l'élément de blocage (11) présente une forme cylindrique.

3. Sous-ensemble (1) selon l'une quelconque des revendications précédentes, **caractérisé en ce que** l'élément de blocage (11) correspond à une vis de blocage, ledit élément de blocage (11) présentant une première extrémité (11a) comportant une tête de vis, une deuxième extrémité (11b) libre, et un axe cylindrique (11c) fileté reliant la première (11a) et la deuxième (11b) extrémités.

4. Sous-ensemble (1) selon l'une quelconque des revendications précédentes, **caractérisé en ce que** la deuxième extrémité (11b) de l'élément de blocage (11) vient au contact d'une face (91) de la bielle (9) disposée en regard de la manivelle (5) lorsque le sous-ensemble de timonerie (1) est dans la position de transport.

5. Sous-ensemble (1) selon la revendication 4, **caractérisé en ce que** la bielle (9) correspond à un profilé en U et **en ce que** la deuxième extrémité (11b) de l'élément de blocage (11) vient se loger à l'intérieur du profilé en U lorsque le sous-ensemble de timonerie (1) est dans la position de transport.

6. Sous-ensemble (1) selon l'une quelconque des revendications précédentes prise en combinaison avec la revendication 3, **caractérisé en ce que** la première ouverture traversante (55) est taraudée de manière à coopérer avec l'axe cylindrique (11c) fileté de l'élément de blocage (11).

7. Sous-ensemble (1) selon la revendication 5, **caractérisé en ce que** la bielle (9) présente à l'intérieur du profilé en U une forme complémentaire à la deuxième extrémité (11b) de l'élément de blocage (11), ladite forme complémentaire étant destinée à coopérer avec la deuxième extrémité (11b) libre de l'élément de blocage (11), ladite forme complémentaire étant de préférence taraudée, afin d'assurer le maintien en place du sous-ensemble de timonerie (1) dans la position de transport.

8. Sous-ensemble (1) selon l'une quelconque des revendications 3 à 5, **caractérisé en ce que** la deuxième extrémité (11b) de l'élément de blocage (11) passe à travers une deuxième ouverture traversante, notamment circulaire, disposée dans la bielle (9) lorsque le sous-ensemble de timonerie (1) est dans la position de transport.

9. Sous-ensemble (1) selon la revendication 8, **caractérisé en ce que** la première ouverture traversante (55) de la manivelle (5) est taraudée.

10. Sous-ensemble (1) selon la revendication 8, **caractérisé en ce que** la deuxième ouverture traversante disposée dans la bielle (9) est taraudée.

11. Sous-ensemble (1) selon la revendication 8, **caractérisé en ce qu'**il comporte en outre un écrou de blocage de la deuxième extrémité (11b) de l'élément de blocage (11), ledit écrou de blocage étant destiné à être fixé au niveau de la deuxième extrémité (11b) de l'élément de blocage (11) traversant la bielle (9) de manière à assurer le maintient en place du sous-ensemble de timonerie (1) dans la position de transport.

12. Timonerie (2) d'un mécanisme d'essuyage, **caractérisée en ce qu'**elle comprend un premier sous-ensemble (1) et un deuxième sous-ensemble (1') reliés entre eux par une bielle (9), **en ce qu'**au moins un des premier (1) et deuxième (1') sous-ensembles est un sous-ensemble (1) selon l'une quelconque des revendications précédentes, ledit au moins un des premier (1) et deuxième (1') sous-ensembles est agencé pour se bloquer dans la position de transport de la timonerie (2) à l'aide de l'élément de blocage (11).

13. Procédé de blocage d'une bielle (9) et d'une manivelle (5) d'un sous-ensemble de timonerie (1) dans une position de transport selon l'une des revendications 1 à 11, **caractérisé en ce qu'**il comprend au moins une des étapes suivantes :
• (a) insertion de l'élément de blocage (11) dans la manivelle (5) de sorte que la première extrémité (11a) est en regard d'une face (57) de la manivelle (5) opposée à celle disposée en regard de la bielle (9),
• (b) rotation de la bielle (9) autour de la liaison rotule (7) de manière à amener la timonerie (2) en position de transport, et
• (c) positionnement de l'élément de blocage (11), notamment par vissage, de manière à ce que la deuxième extrémité (11b) libre soit au moins en contact avec la bielle (9).

## Patentansprüche

1. Untereinheit (1) eines Gestänges (2) eines Wischmechanismus, die Folgendes beinhaltet:
• ein Lager (3),
• eine an dem Lager (3) gelenkig angebrachte Kurbel (5), die ein erstes Ende (51), das mit dem Lager (3) verbunden ist, und ein zweites Ende (53), das ein Kugelgelenk (7) umfasst, aufweist, und
• eine Lenkstange (9), von der ein Ende durch das Kugelgelenk (7) mit der Kurbel (5) verbunden ist,
**dadurch gekennzeichnet, dass** mindestens die Kurbel (5) eine erste Durchgangsöffnung (55) aufweist und dass die Untereinheit (1) ein Blockierelement (11) beinhaltet, das dazu bestimmt ist, in der ersten Durchgangsöffnung (55) positioniert zu werden, und dazu konfiguriert ist, die relative Bewegung zwischen der Lenkstange (9) und der Kurbel (5) zu blockieren.

2. Untereinheit (1) nach dem vorhergehenden Anspruch, **dadurch gekennzeichnet, dass** die erste Durchgangsöffnung (55) eine Kreisform aufweist und dass das Blockierelement (11) eine Zylinderform aufweist.

3. Untereinheit (1) nach einem der vorhergehenden Ansprüche, **dadurch gekennzeichnet, dass** das Blockierelement (11) einer Blockierschraube entspricht, wobei das Blockierelement (11) ein erstes Ende (11a), das einen Schraubenkopf umfasst, ein zweites freies Ende (11b) und einen zylindrischen Gewindeschaft (11c), der das erste (11a) und das zweite (11b) Ende miteinander verbindet, aufweist.

4. Untereinheit (1) nach einem der vorhergehenden Ansprüche, **dadurch gekennzeichnet, dass** das zweite Ende (11b) des Blockierelements (11) mit einer Seite (91) der Lenkstange (9), die, wenn sich die Gestängeuntereinheit (1) in der Transportstellung befindet, gegenüber der Kurbel (5) angeordnet ist, in Kontakt kommt.

5. Untereinheit (1) nach Anspruch 4, **dadurch gekennzeichnet, dass** die Lenkstange (9) einem U-Profil entspricht und dass das zweite Ende (11b) des Blockierelements (11) im Inneren des U-Profils zu liegen kommt, wenn sich die Gestängeuntereinheit (1) in der Transportstellung befindet.

6. Untereinheit (1) nach einem der vorhergehenden Ansprüche in Kombination mit Anspruch 3, **dadurch gekennzeichnet, dass** die erste Durchgangsöffnung (55) mit einem Innengewinde versehen ist, um mit dem zylindrischen Gewindeschaft (11c) des Blockierelements (11) zusammenzuwirken.

7. Untereinheit (1) nach Anspruch 5, **dadurch gekennzeichnet, dass** die Lenkstange (9) im Inneren des U-Profils eine Form aufweist, die zu dem zweiten Ende (11b) des Blockierelements (11) komplementär ist, wobei die komplementäre Form dazu bestimmt ist, mit dem zweiten freien Ende (11b) des Blockierelements (11) zusammenzuwirken, wobei die komplementäre Form vorzugsweise mit einem Innengewinde versehen ist, um den Halt der Gestängeuntereinheit (1) in der Transportstellung zu gewährleisten.

8. Untereinheit (1) nach einem der Ansprüche 3 bis 5, **dadurch gekennzeichnet, dass** das zweite Ende (11b) des Blockierelements (11) durch eine zweite, insbesondere kreisförmige Durchgangsöffnung, die in der Lenkstange (9) angeordnet ist, verläuft, wenn sich die Gestängeuntereinheit (1) in der Transportstellung befindet.

9. Untereinheit (1) nach Anspruch 8, **dadurch gekennzeichnet, dass** die erste Durchgangsöffnung (55) der Kurbel (5) mit einem Innengewinde versehen ist.

10. Untereinheit (1) nach Anspruch 8, **dadurch gekennzeichnet, dass** die zweite, in der Lenkstange (9) angeordnete Durchgangsöffnung mit einem Innengewinde versehen ist.

11. Untereinheit (1) nach Anspruch 8, **dadurch gekennzeichnet, dass** sie ferner eine Mutter zum Blockieren des zweiten Endes (11b) des Blockierelements (11) umfasst, wobei die Blockiermutter dazu bestimmt ist, an dem zweiten Ende (11b) des Blockierelements (11), das durch die Lenkstange (9) verläuft, befestigt zu werden, um den Halt der Gestängeuntereinheit (1) in der Transportstellung zu gewährleisten.

12. Gestänge (2) eines Wischmechanismus, **dadurch gekennzeichnet, dass** es eine erste Untereinheit (1) und eine zweite Untereinheit (1') beinhaltet, die durch eine Lenkstange (9) miteinander verbunden sind, dass mindestens eine von der ersten (1) und der zweiten (1') Untereinheit eine Untereinheit (1) nach einem der vorhergehenden Ansprüche ist, wobei die mindestens eine von der ersten (1) und der zweiten (1') Untereinheit eingerichtet ist, um mit Hilfe des Blockierelements (11) in der Transportstellung des Gestänges (2) blockiert zu werden.

13. Verfahren zum Blockieren, in einer Transportstellung, einer Lenkstange (9) und einer Kurbel (5) einer Gestängeuntereinheit (1) nach einem der Ansprüche 1 bis 11, **dadurch gekennzeichnet, dass** es mindestens einen der folgenden Schritte beinhaltet:
• (a) Einführen des Blockierelements (11) in die Kurbel (5), sodass sich das erste Ende (11a) gegenüber einer Seite (57) der Kurbel (5) befindet, die sich entgegengesetzt zu der befindet, die gegenüber der Lenkstange (9) angeordnet ist,
• (b) Drehen der Lenkstange (9) um das Kugelgelenk (7), um das Gestänge (2) in die Transportstellung zu bringen, und
• (c) Positionieren des Blockierelements (11), insbesondere durch Schrauben, sodass das zweite freie Ende (11b) mit der Lenkstange (9) mindestens in Kontakt ist.

## Claims

1. Subassembly (1) of a linkage (2) of a wiper mechanism comprising:
• a bearing (3),
• a crank (5) articulated on the bearing (3) having a first end (51) connected to the bearing (3) and a second end (53) including a ball joint (7), and
• a link (9) one end of which is connected by the ball joint (7) to the crank (5),
**characterized in that** at least the crank (5) includes a first through-opening (55) and **in that** the subassembly (1) comprises a locking element (11) intended to be positioned in the first through-opening (55) and configured to block the relative movement between the link (9) and the crank (5).

2. Subassembly (1) according to the preceding claim, **characterized in that** the first through-opening (55) has a circular shape and **in that** the locking element (11) has a cylindrical shape.

3. Subassembly (1) according to any one of the preceding claims, **characterized in that** the locking element (11) corresponds to a locking screw, said locking element (11) having a first end (11a) including a screw head, a free second end (11b), and an externally threaded cylindrical shaft (11c) connecting the first end (11a) and the second end (11b).

4. Subassembly (1) according to any one of the preceding claims, **characterized in that** the second end (11b) of the locking element (11) comes into contact with a face (91) of the link (9) disposed facing the crank (5) when the linkage subassembly (1) is in the transport position.

5. Subassembly (1) according to Claim 4, **characterized in that** the link (9) corresponds to a U-section and **in that** the second end (11b) of the locking element (11) comes to be housed inside the U-section when the linkage subassembly (1) is in the transport position.

6. Subassembly (1) according to any one of the preceding claims in combination with Claim 3, **characterized in that** the first through-opening (55) is internally threaded so as to cooperate with the externally threaded cylindrical shaft (11c) of the locking element (11).

7. Subassembly (1) according to Claim 5, **characterized in that** the link (9) has inside the U-section a shape complementary to the second end (11b) of the locking element (11), said complementary shape being intended to cooperate with the free second end (11b) of the locking element (11), said complementary shape preferably being internally threaded in order to hold the linkage subassembly (1) in place in the transport position.

8. Subassembly (1) according to any one of Claims 3 to 5, **characterized in that** the second end (11b) of the locking element (11) passes through a second, notably circular, through-opening in the link (9) when the linkage subassembly (1) is in the transport position.

9. Subassembly (1) according to Claim 8, **characterized in that** the first through-opening (55) of the crank (5) is internally threaded

10. Subassembly (1) according to Claim 8, **characterized in that** the second through-opening in the link (9) is internally threaded

11. Subassembly (1) according to Claim 8, **characterized in that** it further includes a nut for locking the second end (11b) of the locking element (11), said locking nut being intended to be fixed at the second end (11b) of the locking element (11) passing through the link (9) so as to hold the linkage subassembly (1) in place in the transport position.

12. Linkage (2) of a wiper mechanism, **characterized in that** it comprises a first subassembly (1) and a second subassembly (1') interconnected by a link (9), **in that** the first subassembly (1) and/or the second subassembly (1') is a subassembly (1) according to any one of the preceding claims, said first subassembly (1) and/or said second subassembly (1') is adapted to be locked in the transport position of the linkage (2) with the aid of the locking element (11).

13. Method according to any one of Claims 1 to 11 of locking a link (9) and a crank (5) of a linkage subassembly (1) in a transport position, **characterized in that** it comprises at least one of the following steps:
• (a) inserting the locking element (11) in the crank (5) so that the first end (11a) faces a face (57) of the crank (5) opposite that facing the link (9),
• (b) rotating the link (9) about the ball joint (7) so as to move the linkage (2) into the transport position, and
• (c) positioning the locking element (11), notably by screwing, so that the free second end (11b) is at least in contact with the link (9).
